# EUROPÄISCHE PATENTANMELDUNG

(11) **EP 3 929 407 A1**
(43) Veröffentlichungstag der Anmeldung: **29.12.2021**
(21) Anmeldenummer: 20181648.5
(22) Anmeldetag: 23.06.2020
(51) Int. Cl.: F01D 17/16, F01D 25/24, F02C 6/12, F01D 5/10, F01D 25/06, F01D 9/04, F01D 11/06

(54) **MODULARER DÜSENRING FÜR EINE TURBINENSTUFE EINER STRÖMUNGSMASCHINE**

(71) Anmelder: ABB Schweiz AG, 5400 Baden (CH)
(72) Erfinder: SCHLIENGER, Joel, 8053 Zürich (CH); THIELE, Martin, 4732 Zillis (CH); METTLER, Rene, 5417 Untersiggenthal (CH)
(74) Vertreter: Zimmermann & Partner Patentanwälte mbB

(57) **Zusammenfassung**

Ein modularer Düsenring für eine Turbinenstufe einer Strömungsmaschine wird hierin beschrieben. Der modulare Düsenring weist ein Trägersystem aufweisend einen Einstellring, und ein Schaufelmodul aufweisend ein Schaufelblatt auf. Das Schaufelmodul ist lösbar mit dem Trägersystem verbunden. Ferner ist ein, insbesondere im Betrieb unveränderlicher, Einstellwinkel des Schaufelblatts durch das Trägersystem, insbesondere durch den von einem Strömungskanal beabstandeten Einstellring, festgelegt. Das Schaufelmodul ist dazu eingerichtet, insbesondere von dem Einstellring, an ein strömungsseitiges Turbinengehäuseteil lösbar angepresst zu werden. Weiterhin wird ein Schaufelmodul für einen modularen Düsenring einer Turbinenstufe, und die Verwendung eines Trägersystems für einen modularen Düsenring hierin beschrieben.

## Beschreibung

### Technisches Gebiet

Die vorliegende Offenbarung betrifft einen modularen Düsenring für eine Turbinenstufe einer Strömungsmaschine, ein Schaufelmodul für einen modularen Düsenring einer Turbinenstufe, und die Verwendung eines Trägersystems für einen modularen Düsenring.

### Hintergrund

Für die Leistungssteigerung einer Verbrennungskraftmaschine werden heutzutage standardmäßig Abgasturbolader mit einem dem Motor vorgelagerten Verdichter, einer gemeinsamen Welle und der damit verbundenen Turbine im Abgastrakt der Verbrennungskraftmaschine eingesetzt. Mit der Aufladung eines Verbrennungsmotors wird die Luft- und Brennstofffüllmenge und somit das Kraftstoffgemisch in den Zylindern erhöht und daraus ein merklicher Leistungsanstieg für den Motor gewonnen. Der dafür verwendete Abgasturbolader setzt sich standardmäßig aus einem Rotor, umfassend ein Verdichterrad, ein Turbinenrad und eine Verbindungswelle sowie der Lagerung, den strömungsführenden Gehäuseteilen (z.B. das Verdichtergehäuse und Turbinengehäuse) und dem dazwischen liegenden Lagergehäuse zusammen.

Die aus dem Abgas des Motors entnommene und für den Antrieb eines Turboladers wichtige Leistung wird über ein Turbinenrad zunächst auf die rotierende Welle und dann auf das verbundene Verdichterrad übertragen. So kann Luft aus der Umgebung des Verdichters angesaugt, verdichtet und mit hohem Austrittsdruck und Füllgrad in die Zylinder des Motors gepresst werden. Die Leistung aus dem heißen Motorabgas wird strömungstechnisch durch gezielte Drallentnahme im Turbinenrad gewonnen und auf die Welle übertragen. In der konstruktiven Ausführung der Turbinenstufe werden zur Erzeugung dieses Dralles oft Düsenringe zwischen dem Turbinen Spiralgehäuse und dem Turbinenrad eingesetzt.

Der Düsenring setzt sich üblicherweise aus mehreren Strömungsprofilen, sogenannten Düsenringschaufeln zusammen und erzeugt durch die fixe Einstellung eines Profilwinkels eine betriebsabhängige Drallströmung auf das stromab liegende rotierende Turbinenrad. Die wesentliche Eigenschaft des Düsenrings ist nun, den Eintrittsdrall in das Turbinenrad durch die Wahl des Schaufelwinkels so einzustellen, dass ein idealer Betrieb für den Motor ermöglicht wird.

Für jeden Einstellwinkel der Schaufelprofile ändern sich somit auch die Fläche der durchströmten Kanäle und die Spezifikation des Düsenrings sowie die Strömungsgeschwindigkeiten am Austritt des Düsenrings. Somit ändert sich auch die Drallentnahme im rotierenden Turbinenrad bei einem vorgegebenen Eintrittsmassenstrom und Betriebspunkt des Motors. Durch die Wahl der Spezifikation des Düsenrings lässt sich somit das Betriebsverhalten des Turboladers auf die Bedürfnisse des Motors abstimmen und einstellen.

Die Düsenringe werden bei hohen Abgastemperaturen von bis zu 700 °C, in erosiven Medien und bei hohen Strömungsgeschwindigkeiten eingesetzt. Dabei müssen hochwertige und meist teure Grundwerkstoffe verwendet werden, um eine Robustheit des Düsenrings im Betrieb zu gewährleisten.

Üblicherweise werden die Düsenringe meist in Stahlguss gefertigt und anschliessend auf Fertigmass bearbeitet. Teilweise werden die Düsenringe, sofern die Geometrie es erlaubt, auch aus dem Vollen für eine gewünschte Spezifikation auf Mass gefräst.

Im Stand der Technik werden jeweils auf die Bedürfnisse des Motors abgestimmte Turbolader bereitgestellt. Die enorme Spezifikationsvielfalt führt zu einem hohen Herstellungs- und Lagerungsaufwand und damit verbundenen Lagerhaltungskosten.

Angesichts des vorstehend Erwähnten besteht ein Bedarf an einem verbesserten Düsenring für eine Turbinenstufe, welche sich insbesondere leicht an die jeweilige Anforderung eines Turboladers und/oder einer Motoranwendung anpassen lässt.

### Zusammenfassung der Erfindung

Diese Aufgabe wird zumindest teilweise gelöst durch einen modularen Düsenring für eine Turbinenstufe einer Strömungsmaschine gemäß Anspruch 1. Ferner, wird die Aufgabe durch ein Schaufelmodul für einen modularen Düsenring einer Turbinenstufe gemäß Anspruch 15, und durch die Verwendung eines Trägersystems für einen modularen Düsenring gemäß Anspruch 16 gelöst. Weitere Ausführungsformen, Modifikationen und Verbesserungen ergeben sich anhand der folgenden Beschreibung und der beigefügten Ansprüche.

Gemäß einer Ausführungsform wird ein modularer Düsenring für eine Turbinenstufe einer Strömungsmaschine bereitgestellt. Der modulare Düsenring weist ein Trägersystem aufweisend einen Einstellring, und ein Schaufelmodul aufweisend ein Schaufelblatt auf. Das Schaufelmodul ist lösbar mit dem Trägersystem verbunden. Ein, insbesondere im Betrieb unveränderlicher, Einstellwinkel des Schaufelblatts ist durch das Trägersystem, insbesondere durch den von einem Strömungskanal beabstandeten Einstellring, festgelegt. Das Schaufelmodul ist ferner dazu eingerichtet, insbesondere von dem Einstellring, an ein strömungsseitiges Turbinengehäuseteil lösbar angepresst zu werden.

Gemäß einem allgemeinen Aspekt ist vorgesehen, dass der für die jeweilige Anwendung gewünschte Einstellwinkel des Schaufelblatts vor Montage des modularen Düsenrings oder vor Montage der Turbinenstufe bereitgestellt wird. Somit ist es nicht vorgesehen, den Einstellwinkel des Schaufelblatts im Betrieb zu verändern. Der modulare Düsenring kann auch als modularer Fixgeometrie-Düsenring bezeichnet werden.

Der modulare Düsenring ermöglicht die Verwendung einer hohen Anzahl an Gleichteilen, unabhängig von den benötigten Spezifikationen der Turbinenstufe. Insbesondere ist das hierin offenbarte Schaufelmodul oder Düsenringschaufelmodul als Gleichteil vorgesehen. Komponenten des Trägersystems, typischerweise lediglich der Einstellring, sind individuell für den für die jeweilige Anwendung gewünschten Einstellwinkel angefertigt.

Der hierin offenbarte modulare Düsenring ermöglicht die Festlegung der Düsenringspezifikation direkt vor, also beispielsweise erst am Tage, einer Montage. Hierdurch kann das Problem langer Beschaffungszeiten vermieden werden. Die häufig benötigte Spezifikationsvielfalt bezüglich verschiedener Einstellwinkel kann realisiert werden in dem ein Sortiment an für die jeweils gewünschten Einstellwinkel spezifischen Einstellring an Lager gelegt wird. Hohe Lagerhaltungskosten können erheblich reduziert werden, da gemäß den vorliegenden Offenbarungen lediglich Gleichteile und ein Satz spezifisch angefertigter Einstellringe gelagert werden. Üblicherweise sind für eine bestimmte Größe einer Turbinenstufe etwa bis zu 20 unterschiedliche Schaufel-Einstellwinkel erforderlich. Bei aus dem Stand der Technik üblichen gegossenen Düsenringen, d.h. mit nicht-lösbarer, festgelegter Düsenring-Geometrie, wird typischerweise ein großes Sortiment an Düsenringen gelagert, um die kurze Lieferbereitschaft, im Falle einer Bestellung, einhalten zu können. Falls kein großes Sortiment vorrätig gehalten wird, entstehen lange Lieferzeiten. Aus diesem Grund werden im Stand der Technik sehr viele Düsenring Spezifikationen in großen Mengen und Varianten vorgängig an Lager gelegt. Damit verbunden sind neben hohen Lagerhaltungskosten für die Düsenringe auch eine Abhängigkeit von potenziell langen Durchlaufzeiten und unsicheren Zulieferketten.

Vorteilhafterweise lassen sich die gemäß der hierin offenbarten Ausführungsformen Modellkosten für den Düsenring reduzieren, da lediglich der Einstellring spezifisch für den jeweils gewünschten Einstellwinkel variiert wird. Im Stand der Technik entsteht ein sehr hoher Investitionsaufwand für die Modellkosten für die enorme Menge an verschiedener Varianten von Düsenringen.

Der modulare Düsenring ist dazu eingerichtet lösbar an der Turbinenstufe befestigt zu werden. Das Trägersystem kann beispielsweise in ein Gehäuseteil der Turbinenstufe eingesetzt oder verspannt werden. Das Schaufelmodul ist lösbar mit dem Trägersystem verbunden. Ferner ist das Schaufelmodul eingerichtet an ein strömungsseitiges Turbinengehäuseteil lösbar angepresst zu werden. Der hierin offenbarte modulare Düsenring ist somit demontierbar. Beispielsweise kann im Falle eines möglichen Verschleißes des Schaufelmoduls der modulare Düsenring aus der Turbinenstufe ausgebaut werden, das verschlissene Schaufelmodul ersetzt und die Turbinenstufe anschließend wieder zusammengebaut werden. Ein beschädigtes Schaufelmodul lässt sich im Servicefall leicht durch ein neues Schaufelmodul austauschen und der bestehende Düsenring, und alle anderen Komponenten der Turbinenstufe, können weiterhin verwendet werden. Bei im Stand der Technik üblichen gegossenen Düsenringen ist ein Komplettaustausch des Düsenrings im Verschleißfall nötig.

Das Schaufelmodul definiert eine Längsachse ausgehend von einem Ende des Schaufelblatts hin zu einer Fußplatte des Schaufelmoduls. Der Begriff "strömungsseitig" gibt eine Richtung entlang der Längsachse an, und ist zu verstehen als eine einem Strömungskanal, oder im Falle mehrerer dem primären Strömungskanal, zugewandte Richtung. Der Begriff "lagerseitig" gibt eine dem strömungsseitigen Raum im Wesentlichen entgegengesetzte Richtung entlang der Längsachse an.

Das Schaufelmodul weist an einem strömungsseitigen Endabschnitt das Schaufelblatt auf. Die Ausrichtung des Schaufelblatts definiert den Einstellwinkel des Schaufelmoduls, und damit des modularen Düsenrings innerhalb der Turbinenstufe. Lagerseitig von dem Schaufelblatt weist das Schaufelmodul die Fußplatte auf. Die Fußplatte ist typischerweise zylindrisch und flach ausgebildet (d.h. weist eine geringe Ausdehnung entlang der Längsachse auf). Die Fußplatte kann dazu eingerichtet sein einen Abschluss, oder in anderen Worten einen Gehäusewandabschnitt, des (primären) Strömungskanals zu bilden. Das Schaufelmodul kann eine mit der Fußplatte verbundene oder in die Fußplatte integrierte Dichtung, beispielsweise Lamellendichtringe, aufweisen. Die Dichtung kann die Fußplatte radial abdichten um den (primären) Strömungskanal von dem lagerseitigen Ende der Fußplatte abzudichten.

In einer Ausführungsform weist das Schaufelmodul lagerseitig von der Fußplatte einen axial (entlang der Längsachse) ausgedehnten Schaufelschaft auf. Der Schaufelschaft ist im Wesentlichen axial zentrisch angeordnet und erstreckt sich typischerweise über einen Teil des Querschnitts der Fußplatte.

Der Einstellring des Trägersystems kann eine Schaufelschaft-Öffnung aufweisen. Die Schaufelschaft-Öffnung hat eine mindestens dem Querschnitt des Schaufelschafts entsprechende Ausdehnung. Die Schaufelschaft-Öffnung des Einstellrings ist dazu eingerichtet den Schaufelschaft des Schaufelmoduls durchzuführen. Ein lagerseitiger Endabschnitt des Schaufelschafts kann mindestens teilweise in der Schaufelschaft-Öffnung des Einstellrings angeordnet sein. Typischerweise ragt ein lagerseitiges Ende des Schaufelschafts lagerseitig aus dem Einstellring heraus.

Der Schaufelschaft kann eine Sicherung des Schaufelmoduls am Einstellring derart ermöglichen, dass das lagerseitige Ende des Schaufelschafts, das lagerseitig aus der Schaufelschaft-Öffnung des Einstellrings herausragt, lagerseitig vom Einstellring festgehalten und am Durchtritt durch die Schaufelschaft-Öffnung des Einstellring gehindert wird.

Der modulare Düsenring, und insbesondere das Trägersystem, kann ein Sicherungselement aufweisen. Das Sicherungselement kann mit dem lagerseitigen Ende des Schaufelschafts lösbar verbunden sein. Ein Querschnitt des Sicherungselements kann dabei größer sein als ein Querschnitt der Schaufelschaft-Öffnung des Einstellrings oder alternativ eine Geometrie aufweisen, die ein Durchtreten des Sicherungselements strömungsseitig durch die Schaufelschaft-Öffnung verhindert. Somit wird ein "Herausfallen" des Schaufelschafts, und damit des gesamten Schaufelmoduls, in strömungsseitiger Richtung verhindert. Gleichzeitig ist das Schaufelmodul axial in lagerseitiger Richtung beweglich.

Typischerweise ist das Sicherungselement ein Sicherungsring, beispielsweise ein Sprengring oder Haltering. Der lagerseitige Endabschnitt des Schaufelschafts kann zylindrisch und/oder die Schaufelschaft-Öffnung kreisförmig ausgestaltet sein. Der Durchmesser des Sicherungsrings kann dabei größer als der Durchmesser der Schaufelschaft-Öffnung sein. Alternativ kann das Sicherungselement beispielsweise auch ein Sicherungsstift oder eine Sicherungsnadel sein. In einer weiteren Ausgestaltungsform ist das Sicherungselement eine Mutter, wobei das lagerseitige Ende des Schaufelschafts ein axial begrenztes Gewinde aufweist.

Das lagerseitige Ende des Schaufelschafts kann eine Sicherungsnut aufweisen. Das Sicherungselement, insbesondere der Sicherungsring, kann in der Sicherungsnut angeordnet sein. Das Sicherungselement, insbesondere der Sicherungsring, kann formschlüssig mit der Sicherungsnut lösbar verbunden sein.

In einer Ausgestaltungsform ist das Sicherungselement eine Schraube. Das lagerseitige Ende des Schaufelschafts kann ein Innengewinde aufweisen. In dieser Ausgestaltungsform weist der Schaufelschaft typischerweise nicht lagerseitig aus dem Einstellring heraus. Die Schraube kann in den Schaufelschaft derart mit axialem Spiel verschraubt werden, sodass das Schaufelmodul und der Einstellring durch ein weiter unten beschriebenes Spannelement verspannt/angepresst werden kann.

Der Schaufelschaft dient neben dem Sichern des Schaufelmoduls mittels dem Sicherungselement ferner dem Führen und Stabilisieren, und damit einem Zusammenhalten verschiedener Komponenten des modularen Düsenrings (wie beispielsweise einem weiter unten beschriebenen Spannelement).

In einer Ausführungsform weist das Schaufelmodul lagerseitig von der Fußplatte eine axial (entlang der Längsachse) ausgedehnte Stützstruktur auf. Die Stützstruktur ist an einem radialen Endabschnitt des Schaufelmoduls angeordnet und kann sich bis zum radialen Ende des Schaufelmoduls erstrecken. Die Stützstruktur kann sich über einen Teilumfang oder auch über den gesamten Umfang des Schaufelmoduls erstrecken. Die Stützstruktur kann mehrere Stützstreben aufweisen. In einer Ausgestaltungsform weist die Stützstruktur zwei Stützstreben auf. Im Falle von zwei Stützstreben können die Stützstreben um etwa 180° zueinander angeordnet sein, d.h. in etwa an gegenüberliegenden radialen Endabschnitten des Schaufelmoduls. Andere Winkel sind jedoch ebenfalls möglich.

Die Außenfläche(n) der Stützstruktur, d.h. am radialen Ende des Schaufelmoduls, kann zylindrisch ausgestaltet sein. Die Außenfläche(n) der Stützstruktur kann im Wesentlichen die gleiche Form wie die Fußplatte aufweisen, ist jedoch in manchen Ausgestaltungsformen verjüngt gegenüber der Fußplatte. Ein Querschnitt der Außenfläche der Stützstruktur kann somit geringer sein als der Querschnitt der Fußplatte. Die Innenfläche(n) der Stützstruktur ist bevorzugt beabstandet von dem Schaufelschaft angeordnet. Zwischen der Stützstruktur und dem Schaufelschaft ist eine, sich bevorzugt über den gesamten Umfang des Schaufelschafts erstreckende, Lücke oder Hohlraum angeordnet.

Gemäß einer Ausführungsform weist das Schaufelmodul an einem lagerseitigen Ende mindestens ein, typischerweise mindestens zwei, Verbindungselemente auf. Das mindestens eine Verbindungselement ist am lagerseitigen Ende der Stützstruktur angeordnet. Im Falle mehrerer Verbindungselemente kann die Stützstruktur die entsprechende Anzahl Stützstreben aufweisen, wobei jeweils eines der Verbindungselemente am lagerseitigen Ende eines der Stützstreben angeordnet sein kann.

Der Einstellring weist ferner mindestens eine Nut, bevorzugt mindestens zwei Nuten, auf. Die mindestens eine Nut kann dabei die Form einer Einkerbung haben. Bevorzugt ist die Nut jedoch eine axial durchgehende Öffnung. Der Einstellwinkel des Schaufelblatts wird an dem Einstellring festgelegt durch eine lösbare Verbindung zwischen dem mindestens einen Verbindungselement und der mindestens einen Nut. Bezogen auf den Einstellwinkel, d.h. des Rotationsfreiheitsgrades, kann die Verbindung als formschlüssig angesehen werden.

Die Nut kann entsprechend dem Verbindungselement dimensioniert sein. Insbesondere kann die Nut eine zum Querschnitt des Verbindungselements entsprechende Form aufweisen und/oder einen geringfügig größeren Querschnitt als das Verbindungselement aufweisen. Hierdurch wird ein "Spiel" bezüglich dem Einstellwinkel minimiert. In einer beispielhaften Ausgestaltungsform hat das Verbindungselement die Form einer Nocke.

In einer Ausgestaltungsform weist das Schaufelmodul ein erstes und ein zweites Verbindungselement auf. Der Einstellring weist eine erste und eine zweite Nut pro Schaufelmodul auf. Die Verbindungselemente und/oder die Nuten sind dabei derart angeordnet oder ausgestaltet, dass lediglich eine vordefinierte Verbindung oder Einbaulage und damit ein vordefinierter Einstellwinkel möglich ist.

In einer beispielhaften Ausgestaltungsform sind die Verbindungselemente und die Nuten der jeweiligen Stützstrukturen nicht gegenüberstehend angeordnet (d.h. in einem von 180° abweichenden Winkel, beispielsweise 130°).

In einer anderen beispielhaften Ausgestaltungsform weisen die erste und zweite Nut und/oder das erste und zweite Verbindungselement unterschiedliche Querschnitte (Querschnittsgrößen) und/oder unterschiedliche Querschnittsformen (kreisförmig, viereckig etc.) auf. Hierbei kann das erste Verbindungselement entsprechend zur ersten Nut dimensioniert ist, und das zweite Verbindungselement entsprechend zur zweiten Nut dimensioniert sein. "Entsprechend dimensioniert" bedeutet dabei, dass Nut und Verbindungselement einen vergleichbaren Querschnitt und/oder eine vergleichbare Querschnittsform (kreisförmig, viereckig etc.) aufweisen. Gleichzeitig können das erste und zweite Verbindungselement unterschiedliche Querschnitte aufweisen und/oder die erste und zweite Nut unterschiedliche Querschnitte aufweisen.

In einer beispielhaften Ausführungsform weist das Schaufelmodul das erste und zweite Verbindungselement auf. Das erste und zweite Verbindungselement sind in etwa gegenüberstehend angeordnet und haben jeweils die Form einer Nocke. Die erste Nocke hat dabei entlang einer Seite eine größere Ausdehnung als die zweite Nocke. Die erste und zweite Nut sind entsprechend zu der ersten und zweite Nocke ausgestaltet.

Im Falle von drei oder mehr Verbindungselementen und Nuten gilt entsprechendes. Die Verbindungselemente und Nuten sind derart angeordnet oder ausgestaltet, dass lediglich eine vordefinierte Verbindung oder Einbaulage und damit ein vordefinierter Einstellwinkel möglich ist. Das Bereitstellen von zwei oder mehr Verbindungselementen erhöht die mechanische Stabilität des modularen Düsenrings.

Der Einstellring kann spezifisch für den gewünschten Einstellwinkel des Schaufelblatts angefertigt werden. In einer Ausgestaltungsform weist der Einstellring eine flache, zylindrische Form auf. Ferner kann der Einstellring eine Schaufelschaft-Öffnung und mindestens eine, bevorzugt mindestens zwei, von der Schaufelschaft-Öffnung beabstandete Nuten pro Schaufelmodul aufweisen.

Der gewünschte Einstellwinkel des Schaufelblatts kann durch die Positionierung der mindestens einen Nut vorherbestimmt werden. Modulare Düsenringe gemäß der vorliegenden Offenbarung ermöglichen die Festlegung der Düsenringspezifikation erst am Tage einer Montage, wobei lediglich ein vorrätiges Sortiment an Einstellringen für üblich verwendete Schaufel-Einstellwinkel benötigt wird. Die Verbindung zwischen der Nut und dem Verbindungselement wird üblicherweise nicht dauerhaft festgelegt (z.B. durch eine stoffschlüssige Verbindung). Im Wartungsfall kann daher ein beschädigtes Schaufelmodul leicht entfernt und durch ein neues Schaufelmodul getauscht werden.

Gemäß einer Ausführungsform ist das Schaufelmodul dazu eingerichtet von dem Trägersystem, insbesondere dem Einstellring, an ein strömungsseitiges Turbinengehäuseteil lösbar angepresst zu werden. Bevorzugt ist das Schaufelmodul dazu eingerichtet federnd an das strömungsseitige Turbinengehäuseteil angepresst zu werden.

Gemäß einer Ausführungsform weist der modulare Düsenring ein Spannelement auf. Das Spannelement kann beispielsweise eine Spannfeder oder eine Tellerfeder sein. Das Spannelement ist dazu eingerichtet gegen das Trägersystem, insbesondere den Einstellring, zu wirken.

Ein federndes Anpressen des Schaufelmoduls an das strömungsseitige Turbinengehäuseteil kann erfolgen in dem das Spannelement gegen das Trägersystem wirkt und das Trägersystem das Schaufelmodul an das strömungsseitige Turbinengehäuseteil anpresst (durch eine indirekte Einwirkung des Spannelements auf das Schaufelmodul).

Bevorzugt ist das Spannelement eingerichtet gegen das Trägersystem, insbesondere dem Einstellring, und das Schaufelmodul zu wirken. Hierdurch kann ein Kraftübertrag von dem Trägersystem, insbesondere dem Einstellring, auf das Spannelement und von dem Spannelement auf das Schaufelmodul erfolgen.

Das Spannelement kann zwischen dem Einstellring und der Fußplatte angeordnet sein und/oder innerhalb der zwischen der Stützstruktur und dem Schaufelschaft gebildeten Lücke oder Hohlraum angeordnet sein. Das Spannelement kann dabei konzentrisch um den Schaufelschaft und/oder konzentrisch innerhalb der Stützstruktur angeordnet sein. Der Schaufelschaft und/oder die Stützstruktur verhindern ein mögliches Verrutschen des Spannelements. Das Spannelement kann sich gegen das lagerseitige Ende der Fußplatte des Schaufelmoduls abstützen. Alternativ kann auch ein Zwischenteil zwischen Spannelement und Fußplatte angeordnet sein.

In einer Ausführungsform ist das Spannelement dazu eingerichtet das Schaufelmodul, insbesondere durch ein Abstützen des Spannelements gegen die Fußplatte des Schaufelmoduls, an das strömungsseitige Turbinengehäuseteil axial anzupressen. Das Anpressen kann an eine Auflagefläche oder eine Kanalkontur des strömungsseitigen Turbinengehäuseteils erfolgen. Das strömungsseitige Ende des Schaufelblatts kann axial auf die Kanalkontur des Turbinengehäuseteils auf Kontakt verspannt werden. Das Spannelement fungiert somit als Druckfeder. Das Spannelement ist dazu eingerichtet das Schaufelmodul spaltfrei an das strömungsseitige Turbinengehäuseteil anzupressen. Dadurch wird ein Spalt zwischen dem strömungsseitigen Ende des Schaufelblatts und der Kanalkontur des Turbinengehäuseteils vermieden, was zu einer Verbesserung des Turbinenstufen-Wirkungsgrades führen kann.

Das Spannelement kann ferner dazu konfiguriert sein, den Einstellring an ein lagerseitiges Gehäuseteil der Strömungsmaschine axial anzupressen. Das Spannelement kann gegen eine strömungsseitige Auflagefläche des Einstellrings abgestützt werden. Die Auflagefläche kann dabei zwischen der Schaufelschaft-Öffnung und der mindestens einen Nut angeordnet sein. Alternativ kann auch ein Zwischenteil zwischen Spannelement und Auflagefläche des Einstellrings angeordnet sein. Das lagerseitige Ende des Einstellrings kann axial auf eine Auflagefläche oder eine Gegenkontur des lagerseitigen Gehäuseteils auf Kontakt verspannt werden.

Durch das federnde Anpressen von Schaufelblatt gegen das strömungsseitige Turbinengehäuseteil, und insbesondere die Vorspannung zwischen Spannelement und Einstellring und Spannelement und Fußplatte, werden die Komponenten des modularen Düsenrings axial verspannt und sind so gegenüber Vibrationskräften im Betrieb gesichert. Diese Vorspannung der Komponenten vermindert die Gefahr von Schwingreibverschleiss an den Verbindungsflächen zwischen den Komponenten des Düsenrings und dem Gehäuse, womit eine lange Gebrauchsdauer ermöglicht wird und ein mögliches Versagen der Düsenringkonstruktion vermieden werden soll.

Das Trägersystem kann ferner einen Trägerring aufweisen. Der Trägerring ist dazu eingerichtet den Einstellring aufzunehmen. Der Trägerring kann an einem lagerseitigen Ende eine kreisförmige Aussparung oder Einkerbung aufweisen, in welcher der Einstellring eingesetzt ist. Der Einstellring ist somit lagerseitig von dem Trägerring angeordnet. Der Trägerring kann dazu eingerichtet sein eine Bewegung des Einstellrings in strömungsseitiger Richtung zu verhindern. Der Trägerring ist typischerweise nicht dazu eingerichtet eine lagerseitige Bewegung des Einstellrings zu verhindern. Der Trägerring kann ferner ein Hitzeschild oder eine Hitzeschicht aufweisen.

Der Trägerring kann eine axial ausgedehnte Öffnung aufweisen, in die das Schaufelmodul teilweise eingesetzt ist. Insbesondere dient die Öffnung des Trägerrings als Aufnahme für die Stützstruktur und/oder den Schaufelschaft. Die Öffnung des Trägerrings kann zusätzlich zur Führung der Stützstruktur dienen. Vorteilhafterweise kann die Öffnung hierfür einen geringfügig größeren Querschnitt als die Außenfläche der Stützstruktur aufweisen. Der Trägerring kann auch mindestens teilweise als Aufnahme für die Fußplatte dienen. Beispielsweise kann die Öffnung zylindrisch ausgebildet sein. Die Öffnung des Trägerrings kann eine der Fußplatte entsprechende Querschnittsform haben.

Eine Seite des Trägerrings kann dem (primären) Strömungskanal zugewandt sein. Ein Abschnitt der dem Strömungskanal zugewandte Seite kann, insbesondere zusammen mit der Fußplatte, einen Abschluss, oder in anderen Worten einen Gehäusewandabschnitt, des (primären) Strömungskanals bilden. Die mit der Fußplatte verbundene oder in die Fußplatte integrierte Dichtung ist eingerichtet die Fußplatte am lagerseitigen Ende oder einem radialen Ende gegen den Trägerring abzudichten. Der Einstellring ist von dem Strömungskanal beabstandet angeordnet beziehungsweise der primären Strömung nicht oder im Wesentlichen nicht ausgesetzt. Das Spannelement, die Stützstruktur und der Schaufelschaft sind der Hauptströmung nicht oder im Wesentlichen nicht ausgesetzt. Der Trägerring kann dazu eingerichtet sein zwischen dem lagerseitigen Gehäuseteil und dem strömungsseitigen Turbinengehäuseteil axial verspannt zu werden. Der Trägerring kann als Gleichteil gefertigt werden, unabhängig von einem gewünschten Einstellwinkel.

Gemäß einer Ausgestaltungsform weist die Öffnung des Trägerrings einen ersten Querschnitt an dem strömungsseitigen Ende der Öffnung auf, der mindestens so groß oder geringfügig größer als der Querschnitt der Fußplatte ist. Lagerseitig von dem strömungsseitigen Ende der Öffnung, d.h. von einem strömungsseitigen Endabschnitt der Öffnung bis hin zu einem lagerseitigen Ende der Öffnung weist die Öffnung einen zweiten Querschnitt auf. Typischerweise verjüngt sich die Öffnung von dem ersten Querschnitt zu dem zweiten Querschnitt stufenförmig oder in anderen Worten kann die Öffnung einen Absatz aufweisen. Der zweite Querschnitt der Öffnung kann kleiner als der Querschnitt der Fußplatte sein. Gleichzeitig kann der zweite Querschnitt geringfügig größer als der Querschnitt der Außenfläche der Stützstruktur sein. In einer Ausgestaltungsform weisen die Öffnung des Trägerrings und die Fußplatte jeweils eine zylindrische Form auf. Die Öffnung verjüngt sich stufenförmig von einem ersten Durchmesser am strömungsseitigen Ende zu einem geringeren zweiten Durchmesser lagerseitig von dem strömungsseitigen Ende. Der zweite Durchmesser ist geringer als der Durchmesser der Fußplatte.

Somit kann die Öffnung als Aufnahme und zur Führung der Stützstruktur dienen. Ferner schränkt der zweite Querschnitt die Bewegungsfreiheit der Fußplatte in lagerseitiger Richtung ein. Zusammenfassend kann der Trägerring eingerichtet sein, zwischen dem lagerseitigen Gehäuseteil und dem strömungsseitigen Turbinengehäuseteil axial verspannt zu werden, und die Bewegung des Einstellrings in strömungsseitiger Richtung zu limitieren und optional die Bewegung der Fußplatte, und damit des Schaufelmoduls, in lagerseitiger Richtung zu limitieren. Der Verbund aus Einstellring und Schaufelmodul hat somit ein gewisses "Axialspiel" im montierten Zustand zwischen den Gehäuseteilen, kann jedoch durch den Trägerring limitiert werden. Vorteilhafterweise wird hierdurch die Sicherheit erhöht und das Montieren des modularen Trägerrings vereinfacht. Der Verbund aus Einstellring und Schaufelmodul kann durch die Verwendung eines Spannelements axial gespannt werden. Ferner kann durch die Verwendung des am Schaufelschaft verbundenen Sicherungselements das Schaufelmodul am strömungsseitigen "Herausfallen" aus dem Einstellring verhindert werden.

In einer alternativen Ausführungsform kann die Öffnung des Trägerrings auch eine durchgängige Öffnung mit einem konstanten Querschnitt oder Durchmesser in axialer Richtung sein, insbesondere ohne einen Absatz. In diesem Falle kann beispielsweise das Schaufelblatt einen größeren Querschnitt oder eine größere Breite als die Öffnung und/oder die Fußplatte aufweisen. Hierdurch kann eine Bewegung des Schaufelmoduls in lagerseitiger Richtung limitiert werden.

Zusätzlich zu bereits genannten Vorteilen kann der vorliegend offenbarte modulare Düsenring eine einfachere und kostengünstigere Herstellung gegenüber dem Stand der Technik, insbesondere im Vergleich zu gegossenen Düsenringen, ermöglichen.

Wie vorstehend erläutert kann das Schaufelmodul für alle Einstellwinkel in identischer Form verwendet werden und lässt sich somit als Gleichteil herstellen. Das Schaufelblatt, der Schaufelschaft, die Fußplatte und die Stützstruktur können integral oder einstückig, ausgebildet sein. Insbesondere kann das gesamte Schaufelmodul integral ausgebildet sein. Das Schaufelmodul kann durch ein Metallpulverspritzgussverfahren erhältlich sein. Vorteilhafterweise sind im Anschluss an ein Metallpulverspritzgussverfahren keine Nacharbeiten an dem Schaufelmodul erforderlich. Somit kann ein für eine Anwendung geeignetes Schaufelmodul unmittelbar durch ein Metallpulverspritzgussverfahren erhalten werden. Dadurch lassen sich die Fertigungs- und Bauteilkosten für den modularen Düsenring sehr gering halten.

Der Einstellring kann als Rohling vorbereitet werden, beispielsweise aus einem hochwarmfesten und wärmebeständigen Blech als Ring, mit vorgegebener Dicke ausgeführt und in noch unbearbeitetem Zustand und zu geringen Kosten an Lager gelegt werden. Die mindestens eine Nut kann in dem Rohling nach Festlegung auf einen Einstellwinkel eingearbeitet werden. Alternativ kann ein Sortiment an Einstellringen für eine Vielzahl Einstellwinkel für eine spätere Montage vorbereitet und an Lager gelegt werden. Die Nuten des Einstellrings können beispielsweise über ein Laserschneiden oder ein Wasserstrahlschneiden erhältlich sein. Insbesondere die Wasserstrahlmethode kann einfach und kostengünstig umgesetzt werden.

Das Spannelement, insbesondere die Spannfeder, ist aus einem wärmebeständigen Werkstoff hergestellt. Das Sicherungselement, insbesondere der Sicherungsring, ist ebenfalls aus einem wärmebeständigen Werkstoff hergestellt.

Gemäß einer Ausführungsform weist der modulare Düsenring eine Vielzahl oder einen Verbund von Schaufelmodulen auf. Jeder der Schaufelmodule ist lösbar mit dem Trägersystem, insbesondere dem Einstellring, verbunden. Der Einstellring kann eine Schaufelschaft-Öffnung und mindestens eine Nut pro Schaufelmodul aufweisen. Ferner weist der modulare Düsenring jeweils ein Spannelement für jedes Schaufelmodul auf. Bei jedem der Schaufelmodule wirkt das Spannelement gegen das Trägersystem, insbesondere den Einstellring. Ferner kann der Trägerring jeweils eine Öffnung für jedes der Schaufelmodule aufweisen.

Gemäß einer Ausführungsform wird eine Turbinenstufe einer Strömungsmaschine, insbesondere für einen Turbolader oder eine Nutzturbine, bereitgestellt. Die Turbinenstufe weist einen modularen Düsenring nach einem der hierin offenbarten Ausführungsformen auf. Die Turbinenstufe weist ferner ein Turbinenrad, und ein Turbinengehäuse oder Spirale auf. Optional weist die Turbinenstufe in einem Austrittsbereich einen Austrittsdiffusor auf. Der modulare Düsenring kann zwischen dem Turbinengehäuse (Spirale) und dem Turbinenrad angeordnet sein. Der Schaufelschaft und/oder das Schaufelblatt ist in Richtung der Rotorachse des Turbinenrades ausgerichtet. Die Komponenten der Turbinenstufe können als Gleichteil gefertigt sein, unabhängig von einem gewünschten Einstellwinkel (mit Ausnahme des vorstehend erwähnten Einstellrings), insbesondere das Turbinengehäuse und ein Turbinenrad können als Gleichteil ausgestaltet sein.

Die Turbinenstufe kann das lagerseitige Gehäuseteil und/oder das strömungsseitige Turbinengehäuseteil aufweisen. Das lagerseitige Gehäuseteil kann zusammen mit der Fußplatte und/oder dem Trägerring eine erste Strömungswand oder nabenseitige Strömungswand für den (primären) Strömungskanal bilden. Das für die lösbare Anpressung des Schaufelmoduls angeordnete strömungsseitige Turbinengehäuseteil bildet eine zweite Strömungswand für den (primären) Strömungskanal. Die zweite Strömungswand ist der ersten Strömungswand gegenüberliegend angeordnet.

Die Turbinenstufe kann zusätzlich eingerichtet sein für eine lagerseitige Gaseinströmung. Die lagerseitige Gaseinströmung ermöglicht ein Einströmen von Gas lagerseitig von der Fußplatte. Hierdurch kann ein mit dem (primären) Strömungskanal ähnlicher oder höherer Gasdruck auch lagerseitig von der Fußplatte erzielt werden. Die lagerseitige Gaseinströmung ermöglicht eine mechanische Entlastung und dadurch eine Erhöhung der Lebensdauer der Komponenten des modularen Düsenrings, insbesondere des Spannelements. Das lagerseitige Gehäuseteil kann eine Öffnung aufweisen, die mit einem Gasanschluss verbunden ist. Die lagerseitige Gaseinströmung kann mittels verdichterseitiger Sperrluft aus der Verdichterstufe oder mittels einer extern anzuschließenden Sperrluft bereitgestellt werden. In einer weiteren Ausführungsform ist das Schaufelmodul ferner dazu konfiguriert, mittels Sperrluft, an ein strömungsseitiges Turbinengehäuseteil lösbar angepresst zu werden.

Die Turbinenstufe kann montiert werden durch Einsetzen des modularen Düsenrings sowie des Turbinenrades in das lagerseitige Gehäuseteil, anschließendes Aufsetzen des strömungsseitigen Turbinengehäuseteils und axiales Verspannen der Gehäuseteile. Die Turbinenstufe ist dazu eingerichtet durch axiales Verspannen des lagerseitigen Gehäuseteils und des strömungsseitigen Turbinengehäuseteils den modularen Düsenring axial zu komprimieren. Die axiale Komprimierung in Kombination mit dem Spannelement ermöglicht ein spaltfreies Anpressen des Schaufelmoduls an das strömungsseitige Turbinengehäuseteil.

Gemäß einer Ausführungsform wird ein Schaufelmodul für einen modularen Düsenring einer Turbinenstufe bereitgestellt. Das Schaufelmodul kann jedes der Merkmale des vorstehend im Zusammenhang mit dem modularen Düsenring offenbarten Schaufelmoduls aufweisen. Einige der Aspekte werden im Folgenden zusammengefasst.

Das Schaufelmodul weist ein Schaufelblatt, und mindestens ein an einem lagerseitigen Ende angeordnetes Verbindungselement, insbesondere eine Nocke, auf. Das Verbindungselement ist dazu eingerichtet zum Festlegen eines Einstellwinkels des Schaufelblatts durch eine Verbindung zwischen dem Verbindungselement und einer Nut eines Trägersystems, insbesondere einem Einstellring des Trägersystems, des modularen Düsenrings.

Das Schaufelmodul, insbesondere das Schaufelblatt, ist zum lösbaren Anpressen an ein strömungsseitiges Turbinengehäuseteil eingerichtet. Bevorzugt ist das Schaufelblatt zum federnden Anpressen an ein strömungsseitiges Turbinengehäuseteil eingerichtet.

In einer Ausführungsform weist das Schaufelmodul lagerseitig von einer Fußplatte des Schaufelmoduls einen axial ausgedehnten Schaufelschaft auf. Der Schaufelschaft ist im Wesentlichen axial zentrisch angeordnet und erstreckt sich typischerweise über einen Teil des Querschnitts der Fußplatte. Ein lagerseitiger Endabschnitt des Schaufelschafts kann dazu eingerichtet sein mindestens teilweise in eine Schaufelschaft-Öffnung des Einstellrings durchgeführt zu werden und/oder ein lagerseitiges Ende des Schaufelschafts kann dazu eingerichtet sein lagerseitig aus dem Einstellring herauszuragen.

Der Schaufelschaft kann dazu eingerichtet sein am Einstellring, insbesondere mittels einem Sicherungselement gesichert zu werden. Das lagerseitige Ende des Schaufelschafts kann eine Sicherungsnut, zur Aufnahme und/oder Festlegung eines Sicherungselements, aufweisen.

In einer Ausführungsform weist das Schaufelmodul lagerseitig von der Fußplatte eine axial (entlang der Längsachse) ausgedehnte Stützstruktur auf. Die Stützstruktur ist an einem radialen Endabschnitt des Schaufelmoduls angeordnet und kann sich bis zum radialen Ende des Schaufelmoduls erstrecken. Die Stützstruktur kann sich über einen Teilumfang oder auch den gesamten Umfang des Schaufelmoduls erstrecken. Die Stützstruktur kann mehrere Stützstreben aufweisen. Typischerweise weist die Stützstruktur zwei Stützstreben auf. Im Falle von zwei Stützstreben sind die Stützstreben bevorzugt um etwa 180° zueinander angeordnet, d.h. in etwa an gegenüberliegenden radialen Endabschnitten des Schaufelmoduls. Andere Winkel sind jedoch ebenfalls möglich.

Eine Innenfläche(n) der Stützstruktur ist bevorzugt beabstandet von dem Schaufelschaft angeordnet. Zwischen der Stützstruktur und dem Schaufelschaft ist eine, sich bevorzugt über den gesamten Umfang des Schaufelschafts erstreckende, Lücke oder Hohlraum angeordnet. Die Lücke oder Hohlraum kann zur Aufnahme eines Spannelements eingerichtet sein.

Das mindestens eine Verbindungselement ist am lagerseitigen Ende der Stützstruktur angeordnet. Im Falle mehrerer Verbindungselemente kann die Stützstruktur die entsprechende Anzahl Stützstreben aufweisen, wobei jeweils eines der Verbindungselemente am lagerseitigen Ende eines der Stützstreben angeordnet sein kann.

Gemäß einer Ausführungsform wird die Verwendung eines Trägersystems für einen modularen Düsenring bereitgestellt. Das Trägersystem kann jedes der Merkmale des vorstehend im Zusammenhang mit dem modularen Düsenring offenbarten Trägersystems aufweisen. Das Trägersystem weist einen Einstellring, und insbesondere einen Trägerring, auf.

### Kurze Beschreibung der Figuren

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Die Figuren zeigen:
Figur 1 zeigt einen Teil eines modularen Düsenrings gemäß einer Ausführungsform.
Figur 2 zeigt einen Teil eines modularen Düsenrings gemäß einer Ausführungsform.
Figur 3 zeigt ein Schaufelmodul für einen modularen Düsenring gemäß einer Ausführungsform.
Figur 4 zeigt einen Teil eines Trägersystems gemäß einer Ausführungsform.
Figur 5 zeigt einen Teil eines modularen Düsenrings gemäß einer Ausführungsform.
Figur 6 zeigt einen Teil eines modularen Düsenrings gemäß einer Ausführungsform.
Figur 7 zeigt einen Teil eines modularen Düsenrings gemäß einer Ausführungsform.
Figur 8 zeigt einen Teil eines Trägersystems gemäß einer Ausführungsform.
Figur 9 zeigt einen Teil eines modularen Düsenrings gemäß einer Ausführungsform.
Figur 10 zeigt einen Teil eines modularen Düsenrings gemäß einer Ausführungsform.
Figur 11 zeigt einen Teil eines modularen Düsenrings gemäß einer Ausführungsform.
Figur 12 zeigt einen Teil eines modularen Düsenrings gemäß einer Ausführungsform.

### Ausführungsbeispiele

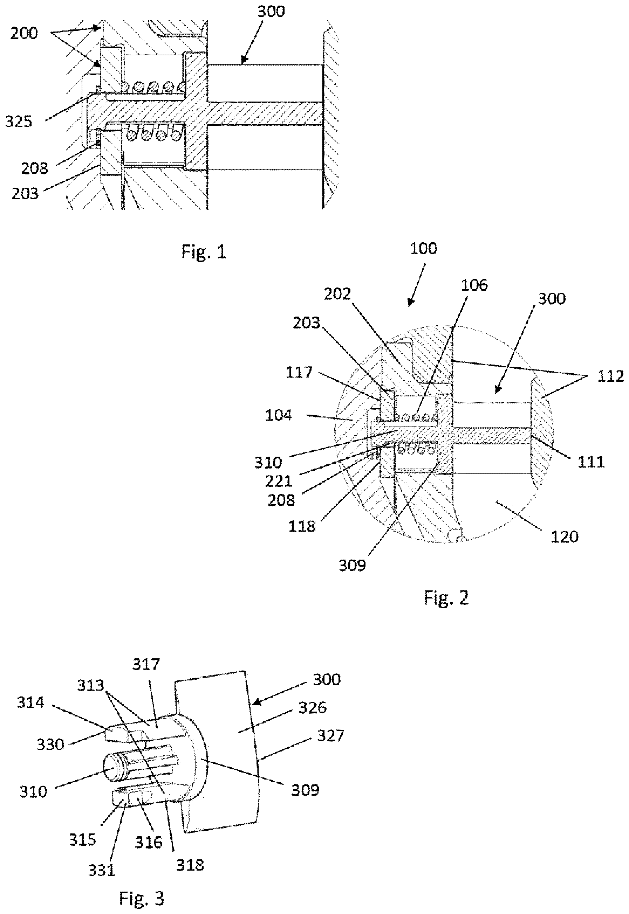

Figur 1 zeigt einen Teil eines modularen Düsenring 100 für eine Turbinenstufe einer Strömungsmaschine. Der modulare Düsenring ist in eingebautem Zustand in einer Turbinenstufe dargestellt. Der modulare Düsenring 100 weist ein Schaufelmodul 300 und ein Trägersystem 200 auf.

Eine Ausführungsform des Schaufelmoduls 300 ist Figur 3 separat gezeigt (nicht im modularen Düsenring 100 eingebaut). Das Schaufelmodul 300 weist an einem strömungsseitigen Endabschnitt das Schaufelblatt 326 auf. Lagerseitig von dem Schaufelblatt 326 weist das Schaufelmodul 300 eine Fußplatte 309 auf. Die Fußplatte 309 ist typischerweise dazu eingerichtet einen Abschluss, oder in anderen Worten einen Gehäusewandabschnitt, des (primären) Strömungskanals 120 zu bilden. Lagerseitig von der Fußplatte 309 weist das Schaufelmodul 300 eine seitliche, axial ausgedehnte Stützstruktur 313 auf. Die Stützstruktur 313 kann mehrere Stützstreben 317, 318 aufweisen. Das in Figur 3 gezeigte Schaufelmodul 300 hat beispielsweise zwei Stützstreben 317, 318, die um etwa 180° zueinander angeordnet, d.h. in etwa an gegenüberliegenden radialen Endabschnitten des Schaufelmoduls 300.

Am lagerseitigen Ende der Stützstruktur 313, beziehungsweise der zwei Stützstreben 317, 318, sind zwei Verbindungselemente 330, 331 angeordnet. Die in Figur 3 gezeigten Verbindungselemente haben die Forme einer Nocke. Die beiden Nocken 330, 331 weisen eine ähnliche Querschnittsform auf, haben jedoch einen unterschiedlichen Querschnitt (oder Querschnittsgröße) 314, 315. Die unterschiedlichen Querschnitte 314, 315 ermöglichen eine eindeutige Festlegung eines Einstellwinkels α des Schaufelblatts 326, und verhindern beispielsweise, dass das Schaufelmodul um 180° gedreht am Trägersystem 200 festgelegt werden kann und dadurch der Schaufelprofilwinkel falsch eingestellt wird, respektive das Schaufelblatt verkehrt zur Strömungsrichtung ausgerichtet wird.

Seitlich der lagerseitigen Enden 314, 315 der Nocken sind Einstellflächen 316 (lediglich eine ist in Figur 3 beschriftet) angeordnet. Die Einstellflächen 316 sind dazu konfiguriert mit den (weiter unten beschriebenen) Nuten des Einstellrings in Kontakt zu treten, um einen Einstellwinkel festzulegen.

Das Schaufelmodul 300 weist ferner einen Schaufelschaft 310 auf. Der Schaufelschaft 310 erstreckt sich von der Fußplatte 309 bis zu einem lagerseitigen Ende des Schaufelmoduls 300. Der Schaufelschaft 310 ist im Wesentlichen axial und kann zusätzlich zentrisch angeordnet sein. An einem lagerseitigen Endabschnitt des Schaufelschafts 310 ist eine Sicherungsnut 325 angeordnet. Die Sicherungsnut 325 ist in Figur 3 nicht beschriftet, und lässt sich am besten in Figur 1 erkennen.

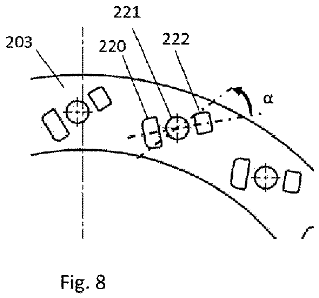

Das Trägersystem umfasst einen Einstellring 203. Ein Abschnitt des Einstellrings 203 ist in Figur 8 separat gezeigt (nicht im modularen Düsenring 100 eingebaut).

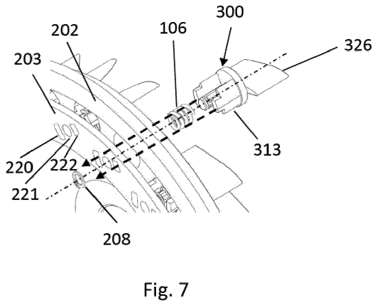

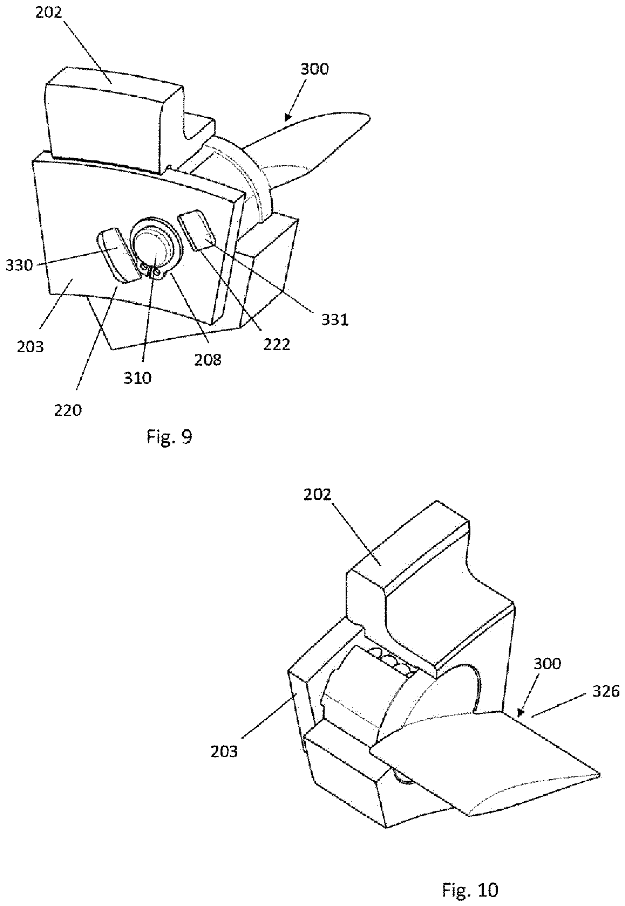

Der Einstellring 203 weist für jedes Schaufelmodul 300 eine Schaufelschaft-Öffnung 221 zur Aufnahme des Schaufelschafts 310 auf. Das Schaufelmodul 300 kann lagerseitig am Schaufelschaft 310 gesichert werden. Der modulare Düsenring 100 weist ein Sicherungselement 208 auf. Das Sicherungselement 208 kann beispielsweise ein Sicherungsring 208 sein, wie in den Figuren 7 und 9 gut zu erkennen ist. Das Sicherungselement 208 ist lösbar mit dem lagerseitigen Ende des Schaufelschafts 310 verbunden, insbesondere ist der Sicherungsring 208 formschlüssig mit der Sicherungsnut 325 lösbar verbunden. Das Sicherungselement 208 verhindert ein strömungsseitiges "Herausrutschen" des Schaufelmoduls 300 aus dem Einstellring 203.

Der Einstellring 203 weist für jedes Schaufelmodul 300 mindestens eine Nut 220, 222 zum Festlegen des Einstellwinkels α des Schaufelblatts 326 auf. Eine Festlegung des Einstellwinkels α erfolgt jeweils durch Verbindung zwischen der präzisen Nocke 330, 331 des Schaufelmoduls und der entsprechend und präzise dimensionierten Nut 220, 222 des Einstellrings 203. Die Einstellflächen 316 der Nocken 330, 331 treten jeweils beidseitig mit den Nuten 220, 222 in Kontakt. Durch die mit jeweils unterschiedlichen Querschnitten ausgeführten Nocken 330, 331 und Nuten 220, 222 ist die richtigen Einbaulage des Schaufelmoduls 300 sichergestellt und nur eine Einbaulage ist damit möglich.

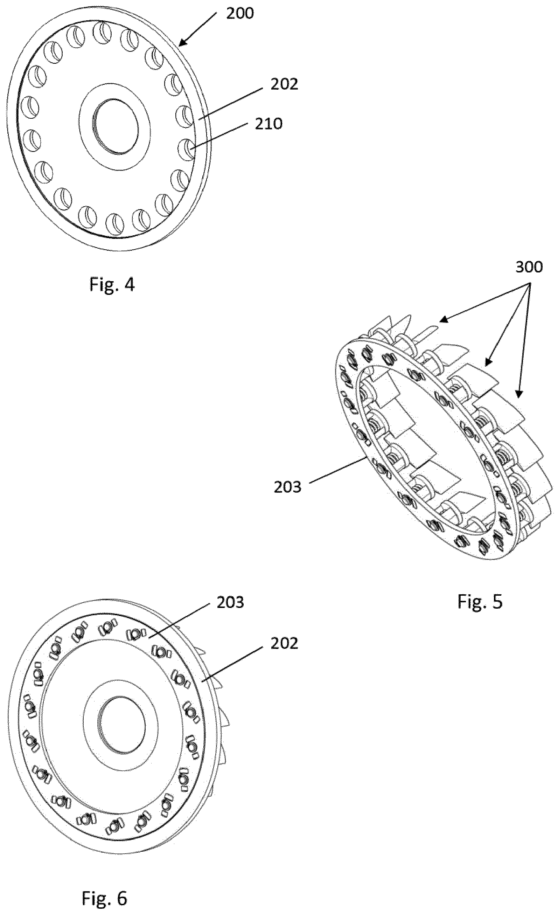

Zusätzlich kann das Trägersystem einen Trägerring 202 aufweisen, der in Figur 1 nur teilweise sichtbar ist. Figur 2 zeigt eine größere Ansicht des modularen Düsenring 100 aus Figur 1. Der Trägerring 202 ist dazu eingerichtet den Einstellring 203 aufzunehmen. Der Trägerring 202 weist an einem lagerseitigen Ende eine kreisförmige Aussparung auf, in die der Einstellring 203 eingesetzt ist. Das lagerseitige Ende des Trägerrings 202 und die kreisförmige Aussparung sind beispielsweise in Figur 4 sichtbar. Der Einstellring 203 kann dabei in den Trägerring 202 eingelegt werden ohne mit dem Trägerring 202 befestigt zu werden. Der Trägerring 202 weist eine Vielzahl Öffnungen 210 auf, die zur Aufnahme der Schaufelmodule 300 dienen (lediglich eines der Öffnungen 210 ist in Figur 4 beschriftet). Dabei kann die Schaufel durch mit zylindrisch ausgeführten Außenflächen der Stützstruktur 313 in der Öffnung 210 des Trägerrings 202 und innerhalb eines verbleibenden radialen Restspaltes sicher geführt werden.

Ferner weist der Trägerring 202 eine zentrale Öffnung auf zur Aufnahme eines Turbinenrads beziehungsweise einer Welle. Der Trägerring 202 ist, wie beispielsweise in Figuren 1 und 2 sichtbar, durch einen lagerseitigen Gehäuseteil 104 festgelegt. Zusätzlich kann der Trägerring 202 auch zwischen dem lagerseitigen Gehäuseteil 104 und einem strömungsseitigen Turbinengehäuseteil 112 axial verspannt werden.

Der modulare Düsenring kann ferner ein Spannelement 106 umfassen. Beispielsweise zeigen Figuren 1 und 2 als Ausführungsformen des Spannelements eine Spannfeder 106. Das Spannelement 106 ist dazu eingerichtet gegen den Einstellring 203 und das Schaufelmodul 300 zu wirken. Hierdurch kann ein Kraftübertrag von dem Trägersystem 200, insbesondere dem Einstellring 203, auf das Spannelement 106 und von dem Spannelement 106 auf das Schaufelmodul 300 erfolgen.

Das Spannelement 106 ist zwischen dem Einstellring 203 und der Fußplatte 309 angeordnet und/oder innerhalb des zwischen der Stützstruktur 313 und dem Schaufelschaft 310 gebildeten Lücke oder Hohlraum angeordnet. Das Spannelement 106 stützt sich gegen das lagerseitige Ende der Fußplatte 309 des Schaufelmoduls 300 ab. Das Spannelement 106 stützt sich ferner gegen eine strömungsseitige Auflagefläche des Einstellrings 203 ab.

Figur 5 zeigt den Verbund aus Einstellring 203 und einer Vielzahl Schaufelmodule 300. Die Schaufelmodule 300 sind dabei in den Einstellwinkeln α durch die Verbindung mit den Nuten festgelegt und mittels der Sicherungselemente 208 gesichert. Das Spannelement 106 führt zu einer Spannung in dem Verbund aus Einstellring 203 und Schaufelmodulen 300.

Figur 6 zeigt eine Kombination aus den Figuren 4 und 5, d.h. der Kombination aus Trägerring 202, Einstellring 203 und einer Vielzahl Schaufelmodule 300. Ein Ausschnitt dieses Verbunds ist in den Figuren 9 und 10 für ein Schaufelmodul 300 gezeigt.

Figur 7 zeigt einen Ausschnitt aus Figur 6 als Explosionszeichnung. Die schmale Strichpunktlinie illustriert die Längsachse, die beiden fett markierten Pfeile deuten die lagerseitige Richtung entlang der Längsachse an.

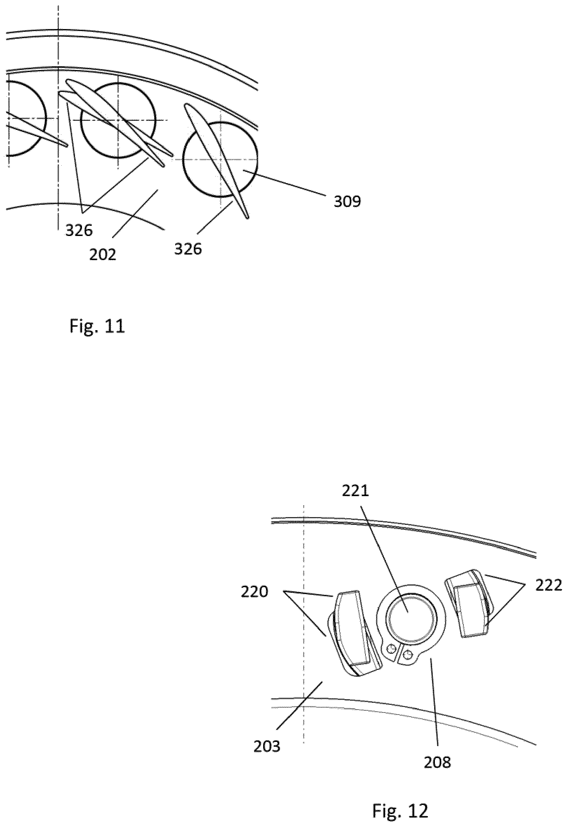

Figur 8 zeigt den Einstellring 203 und die darin enthaltenen Nuten 220, 222 und die Schaufelschaft-Öffnung 221. Zusätzlich deutet Figur 8 durch die beiden Strichpunktlinien zwei verschiedene Winkelstellungen des Einstellwinkels α an. Die Schaufelschaft-Öffnung 221 kann für alle Einstellwinkel α gleich ausgeführt sein. Die Position der Nuten 220, 222 erfordert eine Anpassung an den jeweils gewünschten Einstellwinkel α. Figur 11 deutet ebenfalls die Veränderungen bei verschiedenen Einstellwinkel bei dem mittleren gezeigten Schaufelmodul an, und insbesondere das unterschiedlich angeordnete Schaufelblatt 326. Figur 12 zeigt einen Ausschnitt einer Rückansicht von Figur 11. Beispielhaft sind die Positionen der Nuten 220, 222 für zwei verschiedene Einstellwinkel α gezeigt.

Wie beispielsweise in den Figuren 1 und 2 illustriert ist, wird der modulare Düsenring 100 zwischen dem strömungsseitigen Turbinengehäuseteil 112 und dem lagerseitigen Gehäuseteil 104 der Strömungsmaschine verbaut. Das lagerseitige Gehäuseteil 104 kann eine Aussparung zur Aufnahme des lagerseitig aus dem Einstellring 203 herausragenden Schaufelschaft 310 aufweisen.

Der axiale Abstand zwischen dem strömungsseitigen Turbinengehäuseteil 112 und dem lagerseitigen Gehäuseteil 104 ist dabei kürzer ausgeführt, als der axiale Abstand zwischen dem lagerseitigen Ende des Einstellrings 203 und dem strömungsseitigen Ende 327 des Schaufelblatts 326. Der modulare Düsenring 100 wird durch die Montage axial komprimiert, wodurch die Sicherungselemente 208 axial entlastet werden und der Einstellring 203 sowie das Schaufelblatt 326 jeweils an das Gehäuseteil angepresst werden.

Das lagerseitige Ende des Einstellrings 203 ist dazu eingerichtet an die Gegenkontur 117, 118 des lagerseitigen Gehäuseteils 104 angepresst zu werden. Das strömungsseitige Ende 327 des Schaufelblatts 326 ist dazu eingerichtet an die Kanalkontur 111 des strömungsseitigen Turbinengehäuseteils 112 angepresst zu werden.

Der modulare Düsenring 100 wird somit axial im Rahmen der ausgelegten Federkraft verspannt. Durch das federnde Anpressen, und insbesondere durch die Vorspannung, werden die Komponenten des modularen Düsenrings 100 axial verspannt und sind so gegenüber verschleissbehafteten Vibrationskräften im Betrieb gesichert. Diese Vorspannung der Komponenten vermindert die Gefahr von Schwingreibverschleiss an den Verbindungsflächen zwischen den Komponenten des Düsenrings und dem Gehäuse, womit eine lange Gebrauchsdauer ermöglicht wird und ein mögliches Versagen der Düsenringkonstruktion vermieden wird.

Wenngleich hierin spezifische Ausführungsformen dargestellt und beschrieben worden sind, liegt es im Rahmen der vorliegenden Erfindung, die gezeigten Ausführungsformen geeignet zu kombinieren oder zu modifizieren, ohne vom Schutzbereich der vorliegenden Erfindung abzuweichen.

### Bezugszeichenliste:

- 100: Modularer Düsenring
- 104: lagerseitiges Gehäuseteil
- 106: Spannelement
- 111: Kanalkontur (des strömungsseitigen Turbinengehäuseteils)
- 112: strömungsseitiges Turbinengehäuseteil
- 117, 118: Gegenkontur des lagerseitigen Gehäuseteils
- 120: Strömungskanal
- 200: Trägersystem
- 202: Trägerring
- 203: Einstellring
- 208: Sicherungselement
- 210: axial ausgedehnte Öffnung des Trägerrings
- 220: erste Nut
- 221: Schaufelschaft-Öffnung
- 222: zweite Nut
- 300: Schaufelmodul
- 309: Fußplatte
- 310: Schaufelschaft
- 313: Stützstruktur
- 314, 315: lagerseitige Enden der Verbindungselemente oder Nocken
- 316: Einstellflächen
- 317, 318: Stützstreben
- 325: Sicherungsnut
- 326: Schaufelblatt
- 327: strömungsseitiges Ende des Schaufelblatts
- 330: erstes Verbindungselement oder erste Nocke
- 331: zweites Verbindungselement oder zweite Nocke

## Patentansprüche

1. Modularer Düsenring (100) für eine Turbinenstufe einer Strömungsmaschine, aufweisend:
ein Trägersystem (200) aufweisend einen Einstellring (203); und
ein Schaufelmodul (300) aufweisend ein Schaufelblatt (326),
wobei das Schaufelmodul (300) lösbar mit dem Trägersystem (200) verbunden ist;
wobei ein, insbesondere im Betrieb unveränderlicher, Einstellwinkel (a) des Schaufelblatts (326) durch das Trägersystem (200), insbesondere durch den von einem Strömungskanal beabstandeten Einstellring (203), festgelegt ist; und
wobei das Schaufelmodul (300) dazu eingerichtet ist, insbesondere von dem Einstellring (203), an ein strömungsseitiges Turbinengehäuseteil (112) lösbar angepresst zu werden.

2. Modularer Düsenring (100) nach Anspruch 1, wobei das Schaufelmodul (300) einen axial ausgedehnten Schaufelschaft (310) aufweist, und
wobei der Einstellring (203) eine Schaufelschaft-Öffnung (221) aufweist,
wobei ein lagerseitiger Endabschnitt des Schaufelschafts (310) mindestens teilweise in der Schaufelschaft-Öffnung (221) des Einstellrings (203) angeordnet ist, und insbesondere ein lagerseitiges Ende des Schaufelschafts (310) lagerseitig aus dem Einstellring (203) herausragt.

3. Modularer Düsenring (100) nach einem der vorherigen Ansprüche, ferner aufweisend ein Spannelement (106) dazu eingerichtet gegen das Schaufelmodul (300), und das Trägersystem (200), insbesondere den Einstellring (203), zu wirken.

4. Modularer Düsenring (100) nach Anspruch 3, wobei das Spannelement (106) ferner dazu eingerichtet ist das Schaufelmodul (300), insbesondere durch ein Abstützen des Spannelements (106) gegen die Fußplatte (309) des Schaufelmoduls (300), an das strömungsseitige Turbinengehäuseteil (112) axial anzupressen.

5. Modularer Düsenring (100) nach einem der Ansprüche 3 oder 4, wobei das Spannelement (106) zwischen dem Einstellring (203) und der Fußplatte (309) angeordnet ist.

6. Modularer Düsenring (100) nach einem der Ansprüche 3 bis 5, wobei das Spannelement (106) ferner dazu eingerichtet ist den Einstellring (203), insbesondere durch ein Abstützen des Spannelements (106) gegen eine strömungsseitige Auflagefläche des Einstellrings (203), an ein lagerseitiges Gehäuseteil (104) der Strömungsmaschine axial anzupressen.

7. Modularer Düsenring (100) nach einem der vorherigen Ansprüche, ferner aufweisend ein mit dem lagerseitigen Ende des Schaufelschafts (310) lösbar verbundenes Sicherungselement (208), insbesondere wobei ein Querschnitt des Sicherungselements (208) größer als ein Querschnitt der Schaufelschaft-Öffnung (221) des Einstellrings (203) ist; und optional wobei das Sicherungselement (208) formschlüssig mit einer an dem lagerseitigen Endabschnitt des Schaufelschafts (310) angeordneten Sicherungsnut (325) lösbar verbunden ist.

8. Modularer Düsenring (100) nach einem der vorherigen Ansprüche, wobei das Schaufelmodul (300) an einem lagerseitigen Ende mindestens ein Verbindungselement, insbesondere eine Nocke (330, 331), aufweist, und der Einstellring (203) mindestens eine Nut (220, 222) aufweist,
wobei der Einstellwinkel (a) des Schaufelblatts (326) durch eine Verbindung zwischen dem mindestens einen Verbindungselement (330, 331) und der mindestens einen Nut (220, 222) lösbar festgelegt ist.

9. Modularer Düsenring (100) nach einem der vorherigen Ansprüche, wobei das Schaufelmodul (300) ein erstes und eine zweites Verbindungselement (330, 331), und der Einstellring (203) eine erste und eine zweite Nut (220, 222) aufweist, und
wobei das erste Verbindungselement (330) entsprechend zur ersten Nut (220) dimensioniert ist, und
wobei das zweite Verbindungselement (331) entsprechend zur zweiten Nut (222) dimensioniert ist,
insbesondere wobei das erste und zweite Verbindungselement (330, 331) unterschiedliche Querschnitte (315) aufweisen und/oder die erste und zweite Nut (220, 222) unterschiedliche Querschnitte aufweisen.

10. Modularer Düsenring (100) nach einem der vorherigen Ansprüche, wobei das Schaufelmodul (300) eine Stützstruktur (313) aufweist, welche lagerseitig von der Fußplatte (309) und an einem radialen Endabschnitt des Schaufelmoduls (300) angeordnet ist, wobei das mindestens eine Verbindungselement (330, 331) am lagerseitigen Ende der Stützstruktur (313) angeordnet ist.

11. Modularer Düsenring (100) nach einem der vorherigen Ansprüche, wobei das Trägersystem (200) ferner einen Trägerring (202) aufweist, wobei der Trägerring (202) eine axial ausgedehnte Öffnung (210) aufweist, eingerichtet zur Aufnahme der Stützstruktur (313) und/oder des Schaufelschafts (310); und/oder ferner aufweisend eine Vielzahl Schaufelmodule (300), wobei jedes der Schaufelmodule (300) lösbar mit dem Trägersystem (200) verbunden ist, insbesondere wobei jedes der Schaufelmodule (300) ein Spannelement (106) aufweist, wobei bei jedem der Schaufelmodule (300) das Spannelement (106) gegen das Trägersystem (200), insbesondere den Einstellring (203), wirkt.

12. Modularer Düsenring (100) nach einem der vorherigen Ansprüche, wobei das Schaufelblatt (326), der Schaufelschaft (310), die Fußplatte (309) und die Stützstruktur (313), und insbesondere das Schaufelmodul (300), integral ausgebildet sind, und optional durch ein Metallpulverspritzgussverfahren erhältlich sind.

13. Modularer Düsenring (100) nach einem der vorherigen Ansprüche, wobei das Schaufelmodul (300) ferner dazu konfiguriert ist mittels Sperrluft, insbesondere mittels Sperrluft aus einer Verdichterstufe der Strömungsmaschine, an ein strömungsseitiges Turbinengehäuseteil (112) lösbar angepresst zu werden.

14. Turbinenstufe einer Strömungsmaschine, insbesondere für einen Turbolader oder eine Nutzturbine, aufweisend einen modularen Düsenring (100) nach einem der Ansprüche 1 bis 13.

15. Schaufelmodul (300) für einen modularen Düsenring (100) einer Turbinenstufe, insbesondere für einen Turbolader oder eine Nutzturbine, das Schaufelmodul aufweisend:
ein Schaufelblatt (326), und
mindestens ein an einem lagerseitigen Ende angeordnetes Verbindungselement, insbesondere eine Nocke (330, 331), eingerichtet zum Festlegen eines Einstellwinkels (a) des Schaufelblatts (326) durch eine Verbindung zwischen dem Verbindungselement und einer Nut (220, 222) eines Trägersystems (200), insbesondere einem Einstellring (203) des Trägersystems (200), des modularen Düsenrings (100); und
wobei das Schaufelmodul (300), insbesondere das Schaufelblatt (326), zum lösbaren Anpressen an ein strömungsseitiges Turbinengehäuseteil (112) eingerichtet ist.

16. Verwendung eines Trägersystems (200) für einen modularen Düsenring (100) gemäß einem der Ansprüche 1 bis 13.
